# EUROPÄISCHE PATENTSCHRIFT

(11) **EP 1 223 090 B1**
(45) Veröffentlichungstag und Bekanntmachung des Hinweises auf die Patenterteilung: **25.08.2004**
(21) Anmeldenummer: 02090009.8
(22) Anmeldetag: 10.01.2002
(51) Int. Cl.: B60R 22/44

(54) **Sicherheitsgurtvorrichtung**
Seat belt device
Dispositif de ceinture de sécurité

(30) Priorität: 11.01.2001 DE 10101045
(43) Veröffentlichungstag der Anmeldung: 17.07.2002
(73) Patentinhaber: TAKATA-PETRI (Ulm) GmbH, 89081 Ulm (DE)
(72) Erfinder: Kopetzky, Robert Dr., 91207 Lauf-Simonshofen (DE)
(74) Vertreter: Rummler, Felix Dipl. Ing.

(56) Entgegenhaltungen:
- DE-A- 19 731 689
- GB-A- 1 210 323
- PATENT ABSTRACTS OF JAPAN vol. 2000, no. 09, 13. Oktober 2000 (2000-10-13) & JP 2000 177535 A (TAKATA CORP), 27. Juni 2000 (2000-06-27)

## Beschreibung

Die Erfindung betrifft eine Sicherheitsgurtvorrichtung für Kraftfahrzeuge mit einem Sicherheitsgurt, einem Gurtaufroller und einem Antrieb für den Aufroller.

Derartige Sicherheitsgurtvorrichtungen sind z.B durch DE 19731 689, JP 2000177535 und GB 1210 323 grundsätzlich bekannt. Mittels des Antriebs kann beispielsweise eine Gurtstrafffunktion realisiert werden, indem bei einem Unfall der Aufroller in Aufwickelrichtung angetrieben wird, um dafür zu sorgen, daß der Gurt rechtzeitig eng am Körper des jeweiligen Fahrzeuginsassen anliegt.

Es ist eine Aufgabe der Erfindung, eine Sicherheitsgurtvorrichtung der eingangs genannten Art zu schaffen, die bei möglichst einfachem Aufbau sowie sicherer und zuverlässiger Funktionsweise möglichst vielseitig einsetzbar ist.

Die Lösung dieser Aufgabe erfolgt durch die Merkmale des Anspruchs 1 und insbesondere dadurch, daß ein Getriebe zwischen dem Antrieb und dem Aufroller sowie ein Schalter vorgesehen sind, wobei mit dem Schalter ausgehend von einem Freilaufmodus wenigstens eine Getriebekonfiguration einstellbar ist, die einem Komfortmodus mit in Abwickelrichtung angetriebenem Aufroller und/oder einem Straffermodus mit in Aufwickelrichtung angetriebenem Aufroller entspricht, und wobei der Schalter mittels des Antriebs betätigbar ist und bei gleicher Antriebsrichtung des Antriebs verschiedene Schalterstellungen einstellbar sind.

Die erfindungsgemäße Sicherheitsgurtvorrichtung kann in wenigstens zwei Betriebsmodi betrieben werden, und zwar in einem Freilaufmodus und in zumindest einem Antriebsmodus. Der Freilaufmodus ermöglicht eine normale Benutzung des Sicherheitsgurtes im Normalbetrieb des Fahrzeugs, in dem der Aufroller frei drehbar ist. Handelt es sich bei dem Antriebsmodus um den Komfortmodus, so sorgt der Antrieb für ein automatisches Abwickeln des Gurtes, um dem Fahrzeuginsassen das Ausziehen des Gurtes zu erleichtern oder zu Beginn des Fahrbetriebs den Gurt an den Fahrzeuginsassen heranzureichen. Wenn es sich bei dem Antriebsmodus dagegen um den Straffermodus handelt, dann wird der Gurt mittels des Antriebs auf dem Aufroller aufgewickelt, um z.B. eine Gurtstrafffunktion zu realisieren.

Der Komfortmodus und/oder der Straffermodus können erfindungsgemäß mittels eines Schalters eingestellt werden, der durch den Antrieb betätigbar ist. Mittels des Schalters kann somit eine kraftschlüssige Verbindung zwischen dem Antrieb und dem Aufroller über das Getriebe hergestellt werden. Indem der Schalter mittels des Antriebs betätigt werden kann, sorgt der Antrieb automatisch selbst für die Herstellung der jeweils gewünschten kraftschlüssigen Verbindung.

Erfindungsgemäß ist lediglich eine einzige Antriebsrichtung des Antriebs erforderlich, um verschiedene Schalterstellungen einstellen zu können. Bei Verwendung eines Elektromotors für den Antrieb braucht somit das Vorzeichen eines Ansteuersignals für den Elektromotor nicht geändert zu werden, d.h. der Elektromotor braucht nicht mit unterschiedlichen Polaritäten betrieben, d.h. nicht umgepolt zu werden, um die verschiedenen Schalterstellungen einstellen zu können.

Bevorzugt ist es, wenn verschiedene Getriebekonfigurationen einstellbar sind, von denen eine dem Komfortmodus und eine andere dem Straffermodus entspricht, so daß die Vorrichtung in drei Betriebsmodi betrieben werden kann. Durch Auswahl einer Schalterstellung kann zwischen den zumindest hinsichtlich der Drehrichtung und bevorzugt auch hinsichtlich der Drehgeschwindigkeit des Aufrollers verschiedenen Antriebsmodi und somit zwischen dem Komfortmodus und dem Straffermodus gewählt werden. Hierbei braucht erfindungsgemäß nicht auf die Antriebsrichtung des Antriebs geachtet zu werden. Ein gegebenenfalls vorgesehener Elektromotor des Antriebs braucht daher zum Umschalten zwischen dem Freilaufmodus und dem Komfortmodus nicht umgepolt zu werden.

Vorzugsweise sind das Getriebe und der Schalter derart ausgebildet, daß bei gleicher Antriebsrichtung des Antriebs mittels des Schalters unterschiedliche Drehrichtungen des Aufrollers und/oder unterschiedliche Übersetzungsverhältnisse des Getriebes einstellbar sind.

Bei gleicher Antriebsrichtung kann z.B. im Komfortmodus zum Abwickeln des Gurtes für ein vergleichsweise niedriges Übersetzungsverhältnis gesorgt werden, während zum Aufwickeln des Gurtes im Straffermodus ein relativ hohes Übersetzungsverhältnis realisiert werden kann.

Die Auswahl des jeweiligen Antriebsmodus kann durch die Betriebsweise des Antriebs getroffen werden.

So können gemäß einem bevorzugten Ausführungsbeispiel der Erfindung mittels des Antriebs auswählbare Schalterstellungen von der Größe eines Startmoments des Antriebs abhängig sein. Hierbei wird das Anlaufverhalten des Antriebs ausgenutzt, um zwischen den auswählbaren Schalterstellungen zu unterscheiden.

In einer bevorzugten praktischen Ausgestaltung der Erfindung wird vorgeschlagen, daß mittels des Antriebs auswählbare Schalterstellungen von dem Verlauf eines Ansteuersignals für einen Elektromotor des Antriebs abhängig sind, insbesondere von dem Verlauf eines Startimpulses des Ansteuersignals.

Die zur Auswahl verschiedener Schalterstellungen vorgesehenen Ansteuersignale können sich beispielsweise hinsichtlich eines Maximalwerts unmittelbar im Anschluß an die Signalerzeugung unterscheiden. Zumindest für einen Antriebsmodus, insbesondere für den Straffermodus, kann ein ausgeprägter Startimpuls vorgesehen sein, so daß die anfängliche Signalhöhe oberhalb einer im anschließenden Dauerbetrieb verwendeten Signalhöhe liegt. Es kann folglich ein mehr oder weniger scharfer Startimpuls ) erzeugt werden, der für die jeweils gewünschte Schalterstellung charakteristisch ist und vom Schalter oder von einer Betätigungseinheit für den Schalter jeweils von anderen Startsignalen unterschieden werden kann.

Auf diese Weise können unterscheidbare Startszenarien realisiert werden, so daß in Abhängigkeit von dem jeweiligen Startszenario die entsprechende Schalterstellung erreicht und damit eine gewünschte Getriebekonfiguration eingestellt werden kann.

Gemäß einem weiteren bevorzugten Ausführungsbeispiel der Erfindung ist vorgesehen, daß der Schalter einen schwenkbar gelagerten Schalthebel umfaßt, wobei mittels des Antriebs auswählbare Schalterstellungen von der Schwenkrichtung des Schalthebels abhängig sind.

Hierbei kann der Schalter ausgehend von einer dem Freilaufmodus entsprechenden Freilaufstellung mittels des Antriebs verschwenkt werden, wobei durch die Schwenkrichtung eine Getriebekonfiguration vorgegeben ist, die der durch das Verschwenken jeweils erreichbaren Schalterstellung entspricht.

Gemäß einer weiteren bevorzugten Ausführungsform der Erfindung ist vorgesehen, daß der Schalter über eine Betätigungseinheit ansteuerbar ist, die zur Übertragung eines Startmoments des Antriebs und vorzugsweise außerdem im Anschluß an eine Startmomentübertragung zur Übertragung einer bevorzugt etwa konstanten Haltekraft auf den Schalter ausgebildet ist, wobei die Betätigungseinheit durch ein Rückstoßmoment aufgrund des Startmoments bewegbar ist.

Die Betätigungseinheit arbeitet in dieser Variante nach dem Rückstoßprinzip. Auf diese Weise wird das Startmoment des Antriebs dazu genutzt, den Schalter zu betätigen.

In einer bevorzugten praktischen Ausgestaltung der Erfindung ist vorgesehen, daß die Betätigungseinheit wenigstens bereichsweise eine eine Antriebswelle des Antriebs umfassende Antriebseinheit insbesondere koaxial umgibt und gegenüber der Antriebseinheit verdrehbar ist.

Die Betätigungseinheit kann mit der Antriebseinheit, die beim Start des Antriebs in Drehung versetzt wird, derart zusammenwirken, daß sich die startende Antriebseinheit an der Betätigungseinheit abstößt, so daß die Betätigungseinheit in die entgegengesetzte Richtung in Bewegung gesetzt wird und diese Gegenbewegung in eine Schaltbewegung des Schalters umgesetzt werden kann.

Eine weitere bevorzugte Ausführungsform der Erfindung schlägt vor, daß die Betätigungseinheit eine Nockensteuerung umfaßt, mit welcher der Schalter beaufschlagbar ist.

Vorzugsweise weist die Betätigungseinheit wenigstens zwei als Nocken einer Nockensteuerung dienende Steuerabschnitte auf, mit denen der Schalter auf unterschiedliche Weise beaufschlagbar ist.

Dabei ist insbesondere gemäß einer weiteren Ausführungsform der Erfindung vorgesehen, daß die Steuerabschnitte der Betätigungseinheit zur Übertragung von entgegengesetzten Drehmomenten auf den Schalter ausgebildet sind. Bei gleicher Antriebsrichtung des Antriebs kann der Schalter somit über die Betätigungseinheit in unterschiedliche Richtungen verschwenkt werden.

Des weiteren ist bevorzugt vorgesehen, daß in Abhängigkeit von der Größe eines Startmoments des Antriebs der Schalter entweder nur durch einen Steuerabschnitt oder nacheinander durch zwei Steuerabschnitte beaufschlagt werden kann. Dabei ist es bevorzugt, wenn ab einer vorgebbaren Größe des Startmoments ein den Schalter zuerst beaufschlagender Steuerabschnitt durch einen nachfolgenden Steuerabschnitt übersteuerbar ist.

Der erste Steuerabschnitt kann bei gemeinsamer Beaufschlagung des Schalters dem zweiten Steuerabschnitt gegenüber nachgiebig ausgebildet und insbesondere durch ein mit dem zweiten Steuerabschnitt auf den Schalter übertragbares Drehmoment elastisch verformbar sein.

In einer besonders bevorzugten praktischen Ausgestaltung der Erfindung umfaßt das Getriebe ein Planetengetriebe, wobei der Aufroller als ein Hohlrad des Planetengetriebes ausgebildet ist. Vorzugsweise ist ein Sonnenrad des Planetengetriebes drehfest mit dem Antrieb verbunden. Des weiteren ist vorzugsweise vorgesehen, daß ein den Freilaufmodus ermöglichendes Freilaufteil des Getriebes vorgesehen ist, das als Planetenradträger ausgebildet ist.

Der Schalter wirkt mit dem Getriebe bevorzugt derart zusammen, daß nach Betätigung des Schalters in Abhängigkeit von der Schalterstellung das Freilaufteil des Getriebes durch den Schalter entweder festgehalten oder mit dem Antrieb gekoppelt ist.

Umfaßt das Getriebe ein Planetengetriebe, so kann bei insbesondere für den Komfortmodus mit dem Antrieb gekoppeltem Freilaufteil dieses synchron mit dem vom Antrieb gebildeten Sonnenrad rotieren und ein als Hohlrad ausgebildeter Aufroller über die Planetenräder in die gleiche Richtung wie das Sonnenrad gedreht werden. Der Antrieb des Aufrollers erfolgt somit durch eine Umlaufbewegung der Planetenräder um eine zentrale Drehachse des Antriebs und des Getriebes.

Bei insbesondere für den Straffermodus mittels des Schalters festgehaltenem Freilaufteil dagegen werden die an einer Umlaufbewegung um die zentrale Drehachse gehinderten Planetenräder mittels des angetriebenen Sonnenrades jeweils um ihre eigene Achse gedreht, so daß der durch die Planetenräder angetriebene Aufroller sich entgegengesetzt zum Sonnenrad dreht.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:

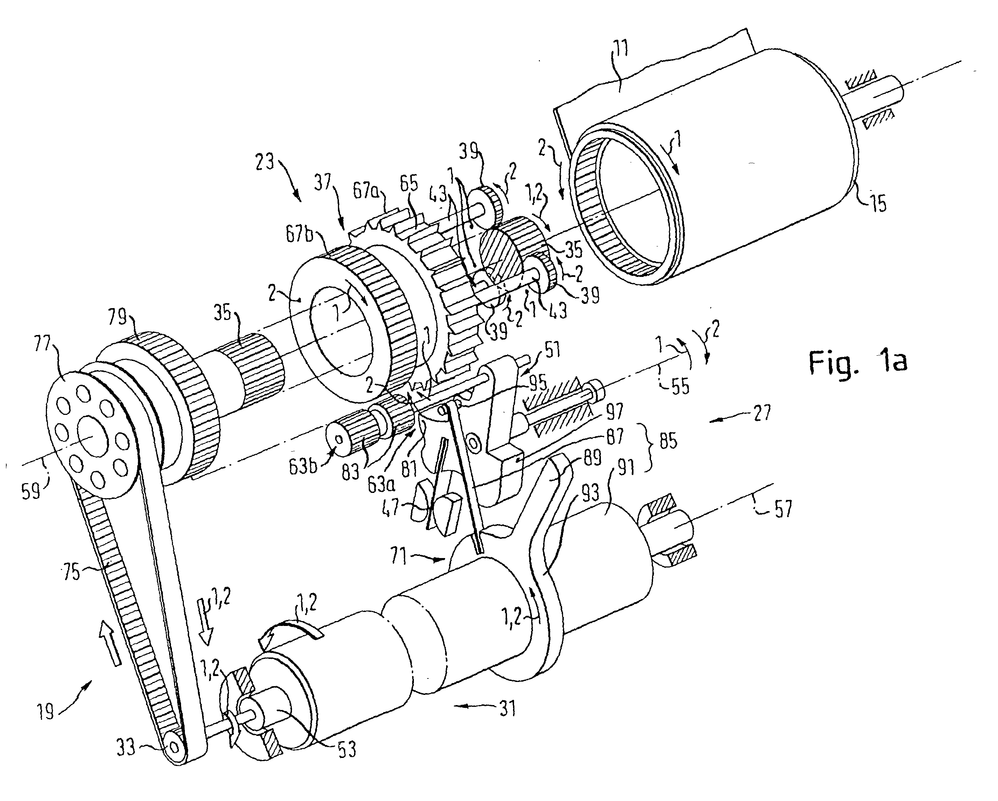

- Fig. 1a: eine perspektivische Darstellung einer Sicherheitsgurtvorrichtung gemäß einer Ausführungsform der Erfindung,

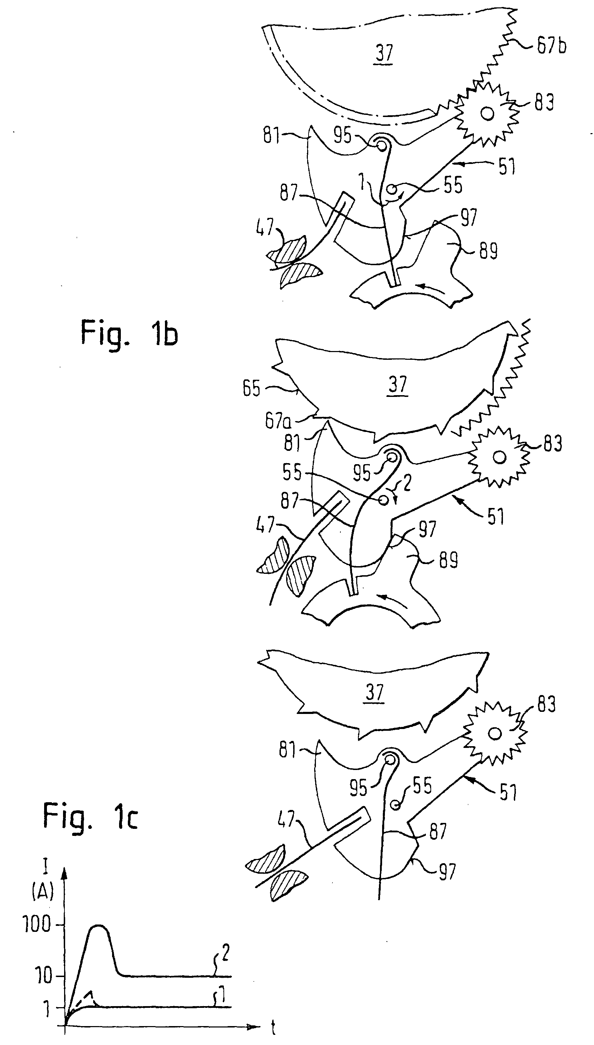

- Fig. 1b: Seitenansichten der Sicherheitsgurtvorrichtung von Fig. 1a, und zwar in einem Komfortmodus, einem Straffermodus und einem Freilaufmodus, und
- Fig. 1c: eine schematische Darstellung verschiedener Ansteuersignale für einen Antrieb der erfindungsgemäßen Sicherheitsvorrichtung.

Die erfindungsgemäße Sicherheitsgurtvorrichtung umfaßt einen Antrieb 19, der von einem Elektromotor 31 mit einer Antriebswelle 33 und einem Riementrieb mit einem Antriebsriemen 75 und einer Riemenscheibe 77 gebildet ist. Der Antriebsriemen 75 ist vorzugsweise als Zahnriemen ausgebildet.

Mittels des Antriebs 19 ist ein Gurtaufroller 15 wahlweise in einer Abwikkelrichtung 1 oder einer Aufwickelrichtung 2 antreibbar, um einen Sicherheitsgurt 11 entweder in einem Komfortmodus abzuwickeln oder in einem Straffermodus aufzuwickeln.

Zwischen der Riemenscheibe 77 und dem Aufroller 15 ist ein Planetengetriebe 23 vorgesehen. Der Antrieb 19 ist insofern ein Bestandteil des Getriebes 23, als die Nabe der Riemenscheibe 77 als Sonnenrad 35 des Planetengetriebes ausgebildet ist. Die Riemenscheibe 77 kann auch als Antriebsscheibe oder Antriebsrad bezeichnet werden.

Die Drehachse des Aufrollers 15 fällt mit der zentralen Drehachse 59 des Getriebes 23 und des Antriebsrades 77 zusammen und verläuft parallel versetzt zur Antriebsachse 57 des Motors 31.

Der Aufroller 15 ist als ein Hohlrad des Getriebes 23 ausgebildet und über die Planetenräder 39 antreibbar. Mit den Achsen 43 der Planetenräder 39 ist ein als Planetenradträger ausgebildetes Freilaufteil 37 des Getriebes 23 gekoppelt. Bei ausgeschaltetem Antrieb 19 ist das Freilaufteil 37 über die Planetenräder 39 gemeinsam mit dem Aufroller 15 relativ zu dem Sonnenrad 35 drehbar. Das Freilaufteil 37 ermöglicht so einen Freilaufmodus der Vorrichtung.

Verschiedene Konfigurationen des Getriebes 23, auf die nachstehend näher eingegangen wird und in denen der Aufroller 15 entweder im Komfortmodus oder im Straffermodus angetrieben werden kann, sind mittels eines Schalters 27 einstellbar. Der Schalter 27 umfaßt einen schwenkbar gelagerten Schalthebel 51. Die Schwenkachse 55 des Schalthebels 51 verläuft parallel zur zentralen Drehachse 59.

Der mehrarmig ausgebildete Schalthebel 51 ist mittels einer Rückstellfeder 47 bei ausgeschaltetem Antrieb 19 in einer dem Freilaufmodus entsprechenden Neutral- oder Freilaufstellung gehalten, in der sich der Schalthebel 51 außer Eingriff mit dem Getriebe 23 befindet.

Der mit dem Getriebe 23 zusammenwirkende Teil des Schalthebels 51 ist bügelförmig ausgebildet und umfaßt zwei Hebelarme, deren freien Enden als Eingriffsabschnitte 63a, 63b ausgebildet sind. Mit den Eingriffsabschnitten 63a, 63b kann der Schalthebel 51 durch Verschwenken aus der Freilaufstellung in axial beabstandete Eingriffsbereiche 67a, 67b eingreifen, die am Außenumfang des Freilaufteils 37 ausgebildet sind.

Ein Haltebereich 67a, über den das Freilaufteil 37 mittels des Schalthebels 51 an einer Drehbewegung gehindert werden kann, umfaßt eine Vielzahl von in Umfangsrichtung verteilt angeordneten Halteaufnahmen 65, die jeweils von radial abstehenden Vorsprüngen des Haltebereiches 67a begrenzt sind. Ein auf der der Riemenscheibe 77 zugewandten Seite des Haltebereiches 67a gelegener Kopplungsbereich 67b umfaßt eine Verzahnung, so daß in diesem Bereich das Freilaufteil 37 als Zahnrad ausgebildet ist.

Ein am Außenumfang der Riemenscheibe 77 axial vom Riemenbereich beabstandet ausgebildeter Eingriffsbereich 79 für den Schalthebel 51 umfaßt ebenfalls eine Verzahnung.

Die Eingriffsabschnitte 63a, 63b des Schalthebels 51 sind an die unterschiedlich ausgebildeten Eingriffsbereiche 67a, 67b des Freilaufteils 37 angepaßt. Ein Halteabschnitt 63a ist in die Halteaufnahmen 65 einsteuerbar, um das Freilaufteil 37 festzuhalten, während mit einem Kopplungsabschnitt 63b eine kraftschlüssige Verbindung zwischen der Riemenscheibe 77 und dem Freilaufteil 37 herstellbar ist.

Während der Halteabschnitt 63a einen Haltezahn 81 umfaßt, weist der Kopplungsabschnitt 63b zwei am Schalthebel 51 drehbar gelagerte und drehfest miteinander verbundene Kopplungszahnräder 83 auf. Anstelle der Zahnräder 83 können auch Reibräder verwendet werden, die dann mit als Reibflächen ausgebildeten Eingriffsbereichen der Riemenscheibe 77 bzw. des Freilaufteils 37 zusammenwirken. Es ist auch möglich, anstelle zweier separater Räder 83 ein einziges, z.B. walzenförmiges Zahnrad oder Reibrad vorzusehen, dessen axiale Länge derart bemessen ist, daß es den axialen Abstand zwischen den Eingriffsbereichen 79, 67b überbrücken kann.

Im Freilaufmodus befindet sich der Schalthebel 51 in der Neutralstellung. Der Aufroller 15 ist in beide Richtungen frei drehbar, da sich das Freilaufteil 37 des Getriebes 23, das durch die sich auf dem Sonnenrad 35 abrollenden Planetenräder 39 in Drehung versetzt wird, ebenfalls frei drehen kann.

Die Betätigung des Schalters 27 erfolgt über eine Betätigungseinheit 71, mit der ein Startmoment des Motors 31 auf den Schalthebel 51 übertragen werden kann. Die Betätigungseinheit 71 umfaßt eine im folgenden näher beschriebene Nockensteuerung 85, die drehfest auf einem zylindrischen Außenkörper 91 angebracht ist, der die Antriebswelle 33 des Motors 31 koaxial umgibt.

Der Außenkörper 91 wirkt mit der Antriebswelle 33 bzw. einer die Antriebswelle 33 umfassenden Antriebseinheit 53 derart zusammen, daß sich die durch Einschalten des Motors 31 in Drehung versetzte Antriebswelle 33 bzw. Antriebseinheit 53 am Außenkörper 91 abstößt. Hierdurch wird der Außenkörper 91 in die der Drehrichtung der Antriebswelle 33 entgegengesetzte Richtung gedreht. Das durch das Startmoment des Motors 31 bedingte Rückstoßmoment sorgt somit für eine Drehung der Nokkensteuerung 85 der Betätigungseinheit 71. Diese durch Ausnutzung des Rückstoßprinzips erzielte Bewegung der Nockensteuerung 85 wird zur Betätigung des Schalthebels 51 genutzt.

Die Nockensteuerung 85 weist zwei in unterschiedliche Winkelrichtungen radial von einem den Außenkörper 91 umgebenden Ringabschnitt 93 der Nockensteuerung 85 abstehende Nocken 87, 89 auf. Die Nocken 87, 89 dienen als Steuerabschnitte, mit denen der Schalthebel 51 auf unterschiedliche Weise beaufschlagbar ist.

Ein Nocken oder Steuerabschnitt 87 ist als elastisch verformbarer Biegestreifen ausgebildet, der mit einem Ende in einer Aussparung des Ringabschnitts 93 befestigt ist und mit dem anderen Ende am Schalthebel 51 angreifen kann, und zwar in der dargestellten Ausführungsform (vgl. Fig. 1b) mit einem gebogenen Endabschnitt an einem vom Schalthebel 51 abstehenden Stift 95.

Die geometrischen Verhältnisse sind derart gewählt, daß eine Drehung des Ringabschnitts 93 über den Biegestreifen 87 in eine Drehung des Schalthebels 51 mit gleichem Drehsinn umgesetzt wird (vgl. obere Abbildung in Fig. 1b).

Der andere Steuerabschnitt 89 ist als starr mit dem Ringabschnitt 93 verbundener Nocken ausgebildet, der beim Verdrehen des Ringabschnitts 93 mit einer Anschlagfläche 97 des Schalthebels 51 zusammenwirkt.

Bezüglich des starren Nockens 89 sind die geometrischen Verhältnisse derart gewählt, daß eine Drehung des Ringabschnitts 93 über den Nocken 89 in eine Drehung des Schalthebels 51 mit entgegengesetztem Drehsinn umgesetzt wird (vgl. mittlere Abbildung in Fig. 1b).

Die Größe des Startmoments des Motors 31 entscheidet darüber, ob der Schalthebel 51 lediglich mittels des Biegestreifens 87 in die eine Richtung verschwenkt wird oder sich der starre Nocken 89 durchsetzt, indem der nachgiebige Biegestreifen 87 übersteuert und der Schalthebel 51 in die andere Richtung verschwenkt wird.

Ab einer vorgebbaren Größe des Startmoments gelangt der starre Nocken 89 unter Überwindung eines bei zu niedrigem Startmoment unüberwindbaren Schaltwiderstands des Schalters in Eingriff mit der Anschlagfläche 97 und ist in der Lage, den Schalthebel 51 unter Verformung des Biegestreifens 87 zu verschwenken.

Durch das Anlaufverhalten des Motors 31 kann folglich die Schalterstellung des Schalters 27 vorgegeben und somit die jeweils gewünschte Getriebekonfiguration mittels des Schalters 27 eingestellt werden, worauf nachstehend näher eingegangen wird.

Eine Möglichkeit, das Anlaufverhalten des Motors 31 und somit das Schaltverhalten zu beeinflussen, ist in Fig. 1c schematisch angedeutet. Es ist ein Anwendungsbeispiel dargestellt, bei dem während des Dauerbetriebs im Anschluß an eine Startphase des Motors 31 im Komfortmodus ein Strom von größenordnungsmäßig 1 A und im Straffermodus ein Strom von größenordnungsmäßig 10 A fließt.

Im Straffermodus wird während der Startphase ein Startimpuls erzeugt, dessen Maximalwert größenordnungsmäßig bei 100 A liegt und sich signifikant von dem Startabschnitt des für den Komfortmodus vorgesehenen Steuersignals unterscheidet. Wie in Fig. 1c durch eine gestrichelte Linie angedeutet ist, kann auch im Komfortmodus ein den Dauerbetriebswert übersteigender Startimpuls erzeugt werden, dessen Maximalwert allerdings signifikant kleiner ist als derjenige des im Straffermodus erzeugten Startimpulses.

Die Startabschnitte der Ansteuersignale sind im Komfortmodus und im Straffermodus jeweils so gewählt, daß die dem jeweiligen Startmoment entsprechenden Rückstoßmomente für die beim Verschwenken des Schalthebels 51 jeweils zu überwindenden Widerstände ausreichend groß sind. Dabei reicht im Komfortmodus das Rückstoßmoment allerdings nicht aus, um den Schalthebel 51 mittels des starren Nockens 89 zu verschwenken, sondern der Schalthebel 51 wird lediglich mittels des Biegestreifens 87 gedreht.

Die obere Abbildung der Fig. 1b zeigt, wie im Komfortmodus der Schalthebel 51 mittels des Biegestreifens 87 verschwenkt wird, um die Kopplungszahnräder 83 am freien Ende des einen Hebelarms des Schalthebels 51 in Eingriff mit der Verzahnung 67b des Freilaufteils 37 und der Verzahnung 79 der Riemenscheibe 77 zu bringen. Die Steifigkeit des Biegestreifens 87 ist ausreichend groß gewählt, um hierbei die Rückstellfeder 47 auslenken zu können.

Die mittlere Darstellung der Fig. 1b zeigt, wie bei ausreichend großem Rückstoßmoment der starre Nocken 89 unter Verformung des Biegestreifens 87 den Schalthebel 51 in die andere Richtung dreht, um den Haltezahn 81 des anderen Hebelarmes des Schalthebels 51 in eine der Halteaufnahmen 65 des anderen Eingriffsbereiches 67a des Freilaufteils 37 einzusteuern. Die Rückstellfeder 47 wird hierbei in die andere Richtung ausgelenkt.

Nach dem Ausschalten des Motors 31 sorgt die Rückstellfeder 47 dafür, daß der Schalthebel 51 in die Neutralstellung zurückgeschwenkt wird, in der sich das Freilaufteil 37 gegenüber dem Schalthebel 51 frei drehen kann.

Die Koppelung zwischen der Antriebswelle 33 bzw. der Antriebseinheit 53 einerseits und dem den Ringabschnitt 93 tragenden Außenkörper 91 andererseits ist derart ausgebildet, daß bei laufendem Motor 31 der Schalthebel 51 über die Betätigungseinheit 71 - im Komfortmodus über den Biegestreifen 87 und im Straffermodus über den starren Nocken 89 - in der zuvor durch das Rückstoßmoment eingestellten Schalterstellung gehalten wird und nach dem Ausschalten des Motors 31 die Rückstellfeder 47 den Schalthebel 51 in die Neutralstellung zurückschwenken kann. Der Freilaufmodus stellt sich somit von selbst wieder ein.

Im Komfortmodus sind das Freilaufteil 37 und das Sonnenrad 35 durch die Zahnräder 83 des Schalthebels 51 synchronisiert, so daß sich das Sonnenrad 35 und das Freilaufteil 37 in die gleiche Richtung und mit der gleichen Geschwindigkeit drehen. Der Antrieb des Aufrollers 15 erfolgt somit durch die Umlaufbewegung der vom Freilaufteil 37 getragenen Planetenräder 39 um die zentrale Drehachse 59, und zwar mit einem durch den Riementrieb vorgegebenen Übersetzungsverhältnis, das vorzugsweise etwa 7 : 1 beträgt.

Im Straffermodus dagegen ist das Freilaufteil 37 durch den Schalthebel 51 an einer Drehung gehindert, so daß der Antrieb des Aufrollers 15 durch die Eigendrehung der mittels des Sonnenrades 35 angetriebenen Planetenräder 39 erfolgt. Dies bedeutet zum einen, daß sich der Aufroller 15 - anders als im Komfortmodus - entgegengesetzt zum Sonnenrad 35 dreht, und zum anderen, daß das Übersetzungsverhältnis des Planetengetriebes, das bevorzugt etwa 3,6 : 1 beträgt, wirksam ist. Zusammen mit dem Übersetzungsverhältnis des Antriebs 19 von etwa 7 : 1 ergibt dies insgesamt zwischen der Antriebswelle 33 des Motors 31 und dem Aufroller 15 ein Übersetzungsverhältnis von etwa 25 : 1.

Bei gleicher Geschwindigkeit der Antriebswelle 33 wird der Gurt 11 im Straffermodus also wesentlich schneller aufgewickelt, als er im Komfortmodus abgewickelt wird. Die Drehgeschwindigkeiten der Antriebswelle 33 im Komfortmodus einerseits und im Straffermodus andererseits können jedoch auch verschieden sein.-.-.-.

### Bezugszeichenliste

- 1: Abwickelrichtung
- 2: Aufwickelrichtung
- 11: Sicherheitsgurt
- 15: Gurtaufroller
- 19: Antrieb
- 23: Getriebe
- 27: Schalter
- 31: Elektromotor
- 33: Antriebswelle
- 35: Sonnenrad
- 37: Freilaufteil
- 39: Planetenrad
- 43: Achse des Planetenrades
- 47: Rückstellfeder
- 51: Schalthebel
- 53: Antriebseinheit
- 55: Schwenkachse
- 57: Antriebsachse
- 59: zentrale Drehachse
- 63a, 63b: Eingriffsabschnitt
- 65: Halteaufnahme
- 67a, 67b: Eingriffsbereich
- 71: Betätigungseinheit
- 75: Antriebsriemen
- 77: Riemenscheibe, Antriebsrad
- 79: Eingriffsbereich
- 81: Haltezahn
- 83: Kopplungszahnrad
- 85: Nockensteuerung
- 87: Steuerabschnitt, Biegestreifen
- 89: Steuerabschnitt, starrer Nocken
- 91: Außenkörper
- 93: Ringabschnitt
- 95: Stift
- 97: Anschlagfläche

## Patentansprüche

1. Sicherheitsgurtvorrichtung für Kraftfahrzeuge mit
- einem Sicherheitsgurt (11),
- einem Gurtaufroller (15),
- einem Antrieb (19) für den Aufroller (15),
- einem Getriebe (23) zwischen dem Antrieb (19) und dem Aufroller (15), und
- einem Schalter (27),
wobei mit dem Schalter (27) ausgehend von einem Freilaufmodus wenigstens eine Getriebekonfiguration einstellbar ist, die einem Komfortmodus mit in Abwickelrichtung (1) angetriebenem Aufroller (15) und/oder einem Straffermodus mit in Aufwickelrichtung (2) angetriebenem Aufroller (15) entspricht, **dadurch gekennzeichnet, daß** der Schalter (27) mittels des Antriebs (19) betätigbar ist und bei gleicher Antriebsrichtung des Antriebs (19) verschiedene Schalterstellungen einstellbar sind.

2. Vorrichtung nach Anspruch 1,
**dadurch gekennzeichnet,**
**daß** das Getriebe (23) und der Schalter (27) derart ausgebildet sind, daß bei gleicher Antriebsrichtung des Antriebs (19) mittels des Schalters (27) unterschiedliche Drehrichtungen des Aufrollers (15) und/oder unterschiedliche Übersetzungsverhältnisse des Getriebes (23) einstellbar sind.

3. Vorrichtung nach Anspruch 1 oder 2,
**dadurch gekennzeichnet,**
**daß** mittels des Antriebs (19) auswählbare Schalterstellungen von der Größe eines Startmoments des Antriebs (19) abhängig sind.

4. Vorrichtung nach einem der vorhergehenden Ansprüche,
**dadurch gekennzeichnet,**
**daß** mittels des Antriebs (19) auswählbare Schalterstellungen von dem Verlauf eines Ansteuersignals für einen Elektromotor (31) des Antriebs (19) abhängig sind, insbesondere von dem Verlauf eines Startimpulses des Ansteuersignals.

5. Vorrichtung nach einem der vorhergehenden Ansprüche,
**dadurch gekennzeichnet,**
**daß** verschiedene Getriebekonfigurationen einstellbar sind, von denen eine dem Komfortmodus und eine andere dem Straffermodus entspricht.

6. Vorrichtung nach einem der vorhergehenden Ansprüche,
**dadurch gekennzeichnet,**
**daß** mittels des Schalters (27) einstellbare Getriebekonfigurationen von der Schalterstellung abhängig sind.

7. Vorrichtung nach einem der vorhergehenden Ansprüche,
**dadurch gekennzeichnet,**
**daß** der Schalter (27) einen schwenkbar gelagerten Schalthebel (51) umfaßt, wobei mittels des Antriebs (19) auswählbare Schalterstellungen von der Schwenkrichtung des Schalthebels (51) abhängig sind.

8. Vorrichtung nach einem der vorhergehenden Ansprüche,
**dadurch gekennzeichnet,**
**daß** der Schalter (27) über eine Betätigungseinheit (71) ansteuerbar ist, die zur Übertragung eines Startmoments des Antriebs (19) und vorzugsweise außerdem im Anschluß an eine Startmomentübertragung zur Übertragung einer bevorzugt etwa konstanten Haltekraft auf den Schalter (27) ausgebildet ist, wobei die Betätigungseinheit (71) durch ein Rückstoßmoment aufgrund des Startmoments bewegbar ist.

9. Vorrichtung nach einem der vorhergehenden Ansprüche,
**dadurch gekennzeichnet,**
**daß** eine Betätigungseinheit (71) für den Schalter (27) wenigstens bereichsweise eine eine Antriebswelle (33) des Antriebs (19) umfassende Antriebseinheit (53) insbesondere koaxial umgibt und gegenüber der Antriebseinheit (53) verdrehbar ist.

10. Vorrichtung nach einem der vorhergehenden Ansprüche,
**dadurch gekennzeichnet,**
**daß** eine Betätigungseinheit (71) für den Schalter (27) eine Nockensteuerung (85) umfaßt, mit welcher der Schalter (27) beaufschlagbar ist.

11. Vorrichtung nach einem der vorhergehenden Ansprüche,
**dadurch gekennzeichnet,**
**daß** eine Betätigungseinheit (71) für den Schalter (27) wenigstens zwei insbesondere als Nocken einer Nockensteuerung (85) ausgebildete Steuerabschnitte (87, 89) aufweist, mit denen der Schalter (27) auf unterschiedliche Weise beaufschlagbar ist.

12. Vorrichtung nach einem der vorhergehenden Ansprüche,
**dadurch gekennzeichnet,**
**daß** Steuerabschnitte (87, 89) einer Betätigungseinheit (71) zur Übertragung von entgegengesetzten Drehmomenten auf den Schalter (27) ausgebildet sind.

13. Vorrichtung nach einem der vorhergehenden Ansprüche,
**dadurch gekennzeichnet,**
**daß** der Schalter (27) mit Steuerabschnitten (87, 89) einer Betätigungseinheit (71) an unterschiedlichen, jeweils von einer Schwenkachse (55) des Schalters (27) beabstandeten Stellen (95, 97) beaufschlagbar ist.

14. Vorrichtung nach einem der vorhergehenden Ansprüche,
**dadurch gekennzeichnet,**
**daß** in Abhängigkeit von der Größe eines Startmoments des Antriebs (19) der Schalter (27) entweder nur durch einen Steuerabschnitt (87) oder nacheinander durch wenigstens zwei Steuerabschnitte (87, 89) einer Betätigungseinheit (71) beaufschlagbar ist.

15. Vorrichtung nach einem der vorhergehenden Ansprüche,
**dadurch gekennzeichnet,**
**daß** ab einer vorgebbaren Größe eines Startmoments des Antriebs (19) ein den Schalter (27) zuerst beaufschlagender Steuerabschnitt (87) einer Betätigungseinheit (71) durch einen nachfolgenden Steuerabschnitt (89) der Betätigungseinheit (71) übersteuerbar ist.

16. Vorrichtung nach einem der vorhergehenden Ansprüche,
**dadurch gekennzeichnet,**
**daß** bei gemeinsamer Beaufschlagung des Schalters (27) durch wenigstens zwei Steuerabschnitte (87, 89) einer Betätigungseinheit (71) ein Steuerabschnitt (87) einem anderen Steuerabschnitt (89) gegenüber nachgiebig ausgebildet ist.

17. Vorrichtung nach einem der vorhergehenden Ansprüche,
**dadurch gekennzeichnet,**
**daß** ein den Schalter (27) zuerst beaufschlagender Steuerabschnitt (87) einer Betätigungseinheit (71) durch ein mit einem anderen Steuerabschnitt (89) der Betätigungseinheit (71) auf den Schalter (27) übertragbares Drehmoment elastisch verformbar ist.

18. Vorrichtung nach einem der vorhergehenden Ansprüche,
**dadurch gekennzeichnet,**
**daß** das Getriebe (23) ein Planetengetriebe umfaßt, wobei der Aufroller (15) als ein Hohlrad des Planetengetriebes ausgebildet ist.

19. Vorrichtung nach einem der vorhergehenden Ansprüche,
**dadurch gekennzeichnet,**
**daß** ein Sonnenrad (35) eines Planetengetriebes drehfest mit dem Antrieb (19) verbunden ist.

20. Vorrichtung nach einem der vorhergehenden Ansprüche,
**dadurch gekennzeichnet,**
**daß** ein den Freilaufmodus ermöglichendes Freilaufteil (37) des Getriebes (23) als Planetenradträger eines Planetengetriebes ausgebildet ist und insbesondere mit den Achsen (43) von Planetenrädern (39) gekoppelt ist.

21. Vorrichtung nach einem der vorhergehenden Ansprüche,
**dadurch gekennzeichnet,**
**daß** nach Betätigung des Schalters (27) in Abhängigkeit von der Schalterstellung ein Freilaufteil (37) des Getriebes (23) durch den Schalter (27) entweder festgehalten oder mit dem Antrieb (19) gekoppelt ist.

## Claims

1. Seatbelt device for motor vehicles, having
- a seatbelt (11),
- a seatbelt retractor (15),
- a drive (19) for the retractor (15),
- a gear mechanism (23) between the drive (19) and the retractor (15), and
- a switch (27),
at least one gear mechanism configuration being adjustable using the switch (27) on the basis of a freewheeling mode, which configuration corresponds to a comfort mode with retractor (15) which is driven in the unwinding direction (1) and/or a seatbelt pretensioning mode with a retractor (15) which is driven in the winding-in direction (2), **characterized in that** the switch (27) can be activated by means of the drive (19), and various switch positions can be set with the same drive direction of the drive (19).

2. Device according to Claim 1, **characterized in that** the gear mechanism (2) and the switch (27) are embodied in such a way that, with the same drive direction of the drive (19), different directions of rotation of the retractor (15) and/or different transmission ratios of the gear mechanism (23) can be set by means of the switch (27).

3. Device according to Claim 1 or 2, **characterized in that** switch positions which can be selected by means of the drive (19) are dependent on the magnitude of a starting torque of the drive (19).

4. Device according to one of the preceding claims, **characterized in that** switch positions which can be selected by means of the drive (19) are dependent on the profile of an actuation signal for an electric motor (31) of the drive (19), in particular on the profile of a starting pulse of the actuation signal.

5. Device according to one of the preceding claims, **characterized in that** various gear mechanism configurations can be set, one of which corresponds to the comfort mode and another to the seatbelt pretensioning mode.

6. Device according to one of the preceding claims, **characterized in that** gear mechanism configurations which can be set by means of the switch (27) are dependent on the switch position.

7. Device according to one of the preceding claims, **characterized in that** the switch (27) comprises a pivotably mounted gear shift lever (51), switch positions which can be selected by means of the drive (19) being dependent on the pivoting direction of the gear shift lever (51).

8. Device according to one of the preceding claims, **characterized in that** the switch (27) can be actuated by means of an activation unit (71) which is designed to transmit a starting torque of the drive (19), and preferably also to transmit a preferably approximately constant holding force to the switch (27), after a starting torque has been transmitted, it being possible to move the actuation unit (71) on the basis of the starting torque by means of a recoil moment.

9. Device according to one of the preceding claims, **characterized in that** an activation unit (71) for the switch (27) surrounds, at least in certain areas, in particular coaxially, a drive unit (53) which comprises a drive shaft (33) of the drive (19), and said activation unit (71) can be rotated with respect to the drive unit (53).

10. Device according to one of the preceding claims, **characterized in that** an activation unit (71) for the switch (27) comprises a cam controller (85) which can act on the switch (27).

11. Device according to one of the preceding claims, **characterized in that** an activation unit (71) for the switch (27) has at least two control sections (87, 89), which are embodied in particular as cams of a cam controller (85) and which can act on the switch (27) in different ways.

12. Device according to one of the preceding claims, **characterized in that** control sections (87, 89) of an activation unit (71) are designed to transmit opposed torques to the switch (27).

13. Device according to one of the preceding claims, **characterized in that** control cams (87, 89) of an activation unit (71) can act on the switch (27) at different locations (95, 97) which are respectively spaced apart from a pivot axis (55) of the switch (27).

14. Device according to one of the preceding claims, **characterized in that** either only one control section (87) or, in succession, at least two control sections (87, 89) of an activation unit (71) can act on the switch (27) as a function of the magnitude of a starting torque of the drive (19).

15. Device according to one of the preceding claims, **characterized in that**, starting from a predefinable magnitude of a starting torque of the drive (19), a control section (87), which acts on the switch (27) first, of an activation unit (71) can be changed over by a subsequent control section (89) of the activation unit (71).

16. Device according to one of the preceding claims, **characterized in that**, when at least two control sections (87, 89) of an activation unit (71) act on the switch (27) together, one control section (87) is designed to give way to another control section (89).

17. Device according to one of the preceding claims, **characterized in that** a control section (87), which acts on the switch (27) first, of an activation unit (71) can be elastically deformed by means of a torque which can be transmitted to the switch (27) by means of a different control section (89) of the activation unit (71).

18. Device according to one of the preceding claims, **characterized in that** the gear mechanism (23) comprises a planetary gear mechanism, the retractor (15) being embodied as a ring gear of the planetary gear mechanism.

19. Device according to one of the preceding claims, **characterized in that** a sun gear (35) of a planetary gear mechanism is connected fixed in terms of rotation to the drive (19).

20. Device according to one of the preceding claims, **characterized in that** a free wheeling part (37), permitting the free wheeling mode, of the gear mechanism (23) is embodied as a planetary gear carrier of a planetary gear mechanism, and in particular is coupled to the axials (43) of planetary gears (39).

21. Device according to one of the preceding claims, **characterized in that**, after the switch (27) has been activated, a free wheeling part (37) of the gear mechanism (23) is either held tight or coupled to the drive (19) by the switch as a function of the switch position.

## Revendications

1. Dispositif de ceinture de sécurité pour véhicules automobiles comprenant
- une ceinture de sécurité (11),
- un enrouleur de sangle (15),
- un entraînement (19) pour l'enrouleur (15),
- un engrenage (23) entre l'entraînement (19) et l'enrouleur (15), et
- un interrupteur (27),
au moins une configuration d'engrenage, qui correspond à un mode confort avec enrouleur (15) entraîné dans le sens de déroulement (1) et/ou un mode tendeur avec enrouleur (15) entraîné dans le sens d'enroulement (2), pouvant être réglée avec l'interrupteur (27) à partir d'un mode roue libre, **caractérisé en ce que** l'interrupteur (27) peut être actionné au moyen de l'entraînement (19) et différentes positions d'interrupteur peuvent être réglées avec un sens d'entraînement identique de l'entraînement (19).

2. Dispositif selon la revendication 1, **caractérisé en ce que** l'engrenage (23) et l'interrupteur (27) sont conçus de telle sorte que, avec un sens d'entraînement identique de l'entraînement (19), différents sens de rotation de l'enrouleur (15) et/ou différents rapports de transmission de l'engrenage (23) peuvent être réglés au moyen de l'interrupteur (27).

3. Dispositif selon la revendication 1 ou 2, **caractérisé en ce que** des positions d'interrupteur pouvant être sélectionnées au moyen de l'entraînement (19) sont dépendantes de la grandeur d'un couple de démarrage de l'entraînement (19).

4. Dispositif selon l'une quelconque des revendications précédentes, **caractérisé en ce que** des positions d'interrupteur pouvant être sélectionnées au moyen de l'entraînement (19) sont dépendantes de la courbe d'un signal de commande pour un moteur électrique (31) de l'entraînement (19), en particulier de la courbe d'une impulsion de démarrage du signal de commande.

5. Dispositif selon l'une quelconque des revendications précédentes, **caractérisé en ce que** différentes configurations d'engrenage peuvent être réglées, dont une correspond au mode de confort et une autre au mode tendeur.

6. Dispositif selon l'une quelconque des revendications précédentes, **caractérisé en ce que** des configurations d'engrenage pouvant être réglées au moyen de l'interrupteur (27) sont dépendantes de la position d'interrupteur.

7. Dispositif selon l'une quelconque des revendications précédentes, **caractérisé en ce que** l'interrupteur (27) comprend un levier de commutation (51) monté à pivotement, des positions d'interrupteur pouvant être sélectionnées au moyen de l'entraînement (19) étant dépendantes du sens de pivotement du levier de commutation (51).

8. Dispositif selon l'une quelconque des revendications précédentes, **caractérisé en ce que** l'interrupteur (27) peut être commandé au moyen d'une unité d'actionnement (71), qui est conçue pour la transmission d'un couple de démarrage de l'entraînement (19) et de préférence en plus à la suite d'une transmission de couple de démarrage pour la transmission d'une force de retenue de préférence à peu près constante à l'interrupteur (27), l'unité d'actionnement (71) pouvant être déplacée par un couple de recul en raison du couple de démarrage.

9. Dispositif selon l'une quelconque des revendications précédentes, **caractérisé en ce qu'**une unité d'actionnement (71) pour l'interrupteur (27) entoure en particulier de façon coaxiale et au moins par endroits une unité d'entraînement (53) comprenant un arbre d'entraînement (33) de l'entraînement (19) et peut tourner par rapport à l'unité d'entraînement (53).

10. Dispositif selon l'une quelconque des revendications précédentes, **caractérisé en ce qu'**une unité d'actionnement (71) pour l'interrupteur (27) comprend une commande de came (85) avec laquelle l'interrupteur (27) peut être sollicité.

11. Dispositif selon l'une quelconque des revendications précédentes, **caractérisé en ce qu'**une unité d'actionnement (71) pour l'interrupteur (27) comprend au moins deux sections de commande (87, 89) conçues en particulier comme des cames d'une commande de came (85), sections avec lesquelles l'interrupteur (27) peut être sollicité de façon différente.

12. Dispositif selon l'une quelconque des revendications précédentes, **caractérisé en ce que** des sections de commande (87, 89) d'une unité d'actionnement (71) sont conçues pour la transmission de couples opposés à l'interrupteur (27).

13. Dispositif selon l'une quelconque des revendications précédentes, **caractérisé en ce que** l'interrupteur (27) peut être sollicité avec des sections de commande (87, 89) d'une unité d'actionnement (71) en différents endroits espacés respectivement d'un axe de pivotement (55) de l'interrupteur (27).

14. Dispositif selon l'une quelconque des revendications précédentes, **caractérisé en ce que**, en fonction de la grandeur d'un couple de démarrage de l'entraînement (19), l'interrupteur peut être sollicité soit uniquement par une section de commande (87) soit de façon successive par au moins deux sections de commande (87, 89) d'une unité d'actionnement (71).

15. Dispositif selon l'une quelconque des revendications précédentes, **caractérisé en ce que**, à partir d'une grandeur prédéfinissable d'un couple de démarrage de l'entraînement (19), une section de commande (87), sollicitant d'abord l'interrupteur (27), d'une unité d'actionnement (71) peut être surrégulée par une section de commande (89) successive de l'unité d'actionnement (71).

16. Dispositif selon l'une quelconque des revendications précédentes, **caractérisé en ce que**, dans le cas d'une sollicitation commune de l'interrupteur (27) par au moins deux sections de commande (87, 89) d'une unité d'actionnement (71), une section de commande (87) est conçue de façon souple par rapport à une autre section de commande (89).

17. Dispositif selon l'une quelconque des revendications précédentes, **caractérisé en ce qu'**une section de commande (87), sollicitant d'abord l'interrupteur (27), d'une unité d'actionnement (71) peut être déformée de façon élastique par un couple transmissible avec une autre section de commande (89) de l'unité d'actionnement (71) à l'interrupteur (27).

18. Dispositif selon l'une quelconque des revendications précédentes, **caractérisé en ce que** l'engrenage (23) comprend un engrenage planétaire, l'enrouleur (15) étant conçu comme une roue creuse de l'engrenage planétaire.

19. Dispositif selon l'une quelconque des revendications précédentes, **caractérisé en ce qu'**une roue solaire (35) d'un engrenage planétaire est reliée de façon solidaire en rotation à l'entraînement (19).

20. Dispositif selon l'une quelconque des revendications précédentes, **caractérisé en ce qu'**une partie de roue libre (37), permettant le mode roue libre, de l'engrenage (23) est conçue comme un support de roue planétaire d'un engrenage planétaire et couplée en particulier avec les axes (43) de roues planétaires (39).

21. Dispositif selon l'une quelconque des revendications précédentes, **caractérisé en ce que**, après l'actionnement de l'interrupteur (27) et en fonction de la position d'interrupteur, une partie de roue libre (37) de l'engrenage (23) est soit maintenue par l'interrupteur (27) soit couplée avec l'entraînement (19).
